# FASCICULE DE BREVET EUROPEEN

(11) **EP 3 146 642 B1**
(45) Date de publication et mention de la délivrance du brevet: **24.07.2019**
(21) Numéro de dépôt: 15732027.6
(22) Date de dépôt: 18.05.2015
(51) Int. Cl.: H04B 5/00, B65D 55/06, G06K 19/077

(54) **ÉTIQUETTE ANTI-CONTREFAÇON DOUBLE MODE**
FÄLSCHUNGSSCHUTZETIKETT MIT DUALEM MODUS
DUAL-MODE ANTI-COUNTERFEITING TAG

(30) Priorité: 21.05.2014 FR 1454571; 01.12.2014 FR 1461751
(43) Date de publication de la demande: 29.03.2017
(73) Titulaire: WISeKey Semiconductors, 13590 Meyreuil (FR)
(72) Inventeur: ENGUENT, Jean-Pierre, 13090 Aix en Provence (FR); BOIRON, Ghislain, 13090 Aix en Provence (FR); PIC, Pierre, 13600 Ceyreste (FR); GUIDET, Tania, 13100 Aix en Provence (FR)
(74) Mandataire: de Jong, Jean Jacques
(86) Numéro de dépôt international: PCT/FR2015/051289
(87) Numéro de publication internationale: WO 2015/177448

(56) Documents cités:
- US-A1- 2005 012 616
- US-A1- 2007 210 173

## Description

### Domaine technique

L'invention est relative aux dispositifs d'indentification sans contact à couplage magnétique en champ proche, par exemple de type NFC (de l'anglais « Near Field Communication »), du type ISO 14443, ou du type ISO 15693, et plus spécifiquement à un dispositif sans contact anti-contrefaçon permettant de garantir l'authenticité du contenu d'une bouteille.

### Arrière-plan

Le brevet US7898422 décrit un dispositif NFC anti-contrefaçon intégré dans un bouchon de bouteille de vin. Le dispositif est agencé pour que l'insertion d'un tirebouchon endommage l'antenne ou le microcircuit de commande.

Lorsque le dispositif est intègre, il peut être interrogé à distance par un lecteur NFC pour lire des informations sur le produit, et également pour confirmer l'authenticité des informations. Lorsque le bouchon a été retiré, le dispositif NFC se trouve endommagé, de sorte que le bouchon ne peut pas être réutilisé pour authentifier le contenu d'une nouvelle bouteille.

La demande de brevet US 2005-0012616 décrit une étiquette RFID ayant une antenne sacrificielle destinée à être rompue à l'ouverture d'un conteneur, par exemple. L'antenne sacrificielle autorise une lecture de l'étiquette dans une plage de distances étendue. Lorsque l'antenne sacrificielle est rompue, l'étiquette peut continuer à fonctionner en mode « sans antenne », autorisant une lecture seulement dans une plage de distances restreinte.

La demande de brevet US 2007-0210173 décrit une étiquette RFID en deux parties dont chacune est munie d'un composant RFID indépendant possédant des fonctions cryptographiques. Une rupture de l'étiquette rend inopérant l'un des deux composants RFID. Un lecteur est programmé pour signaler que l'étiquette est intègre s'il parvient à négocier une authentification avec les deux composants RFID de l'étiquette. Si une seule authentification est négociable, c'est que l'étiquette a été rompue.

### Résumé

L'invention est définie par la revendication indépendante. Des modes de réalisation sont décrits dans les revendications dépendantes. De façon générale, on prévoit une étiquette anti-contrefaçon à couplage magnétique en champ proche, comprenant un microcircuit de commande conçu pour mettre en oeuvre une fonction de base et une fonction cryptographique ; une piste conductrice sacrificielle agencée en travers d'une zone sacrificielle de l'étiquette ; et un circuit de détection de continuité de la piste sacrificielle, coopérant avec le microcircuit pour mettre en oeuvre la fonction de base sans mettre en oeuvre la fonction cryptographique lorsque la piste sacrificielle est rompue.

Le microcircuit peut être un microcircuit standard comprenant une broche d'entrée/sortie numérique programmable, la piste sacrificielle étant connectée entre la broche d'entrée/sortie et une broche d'alimentation du microcircuit, le microcircuit étant programmé pour tester l'état de la broche d'entrée/sortie pour déterminer la mise en oeuvre de la fonction cryptographique.

Alternativement, l'étiquette peut comprendre un circuit d'antenne conçu pour assurer une fonction de détection de continuité, la piste sacrificielle étant connectée dans le circuit d'antenne de manière que sa rupture décale la fréquence d'accord du circuit d'antenne, le décalage de la fréquence d'accord étant choisi pour que la puissance d'alimentation reçue par le microcircuit soit abaissé à un niveau insuffisant pour la mise en oeuvre de la fonction cryptographique, mais à un niveau encore suffisant pour la mise en oeuvre de de la fonction de base.

L'étiquette peut comprendre un substrat pliable en forme de ruban ; une antenne comprise dans le circuit d'antenne ; un condensateur connecté au circuit d'antenne ; une impédance sacrificielle ; et la piste sacrificielle agencée sur le ruban pour connecter l'impédance sacrificielle au circuit d'antenne.

L'étiquette peut comprendre deux plages métalliques disposées en regard sur les faces opposées du substrat dans une zone d'intérêt du substrat, configurées de manière qu'un transpercement de la zone d'intérêt provoque un court-circuit permanent entre les deux plages ; et un circuit configuré pour détecter un court-circuit entre les deux plages métalliques.

Alternativement, l'étiquette peut comprendre une structure sacrificielle comprenant une piste conductrice reliant l'impédance sacrificielle au circuit d'antenne, configurée en créneaux occupant une zone d'intérêt du substrat de manière qu'un transpercement de la zone d'intérêt brise la piste conductrice.

L'antenne peut comprendre des spires bobinées en anneau autour d'une zone centrale du ruban ; l'impédance sacrificielle peut être agencée à une première extrémité du ruban ; et la piste sacrificielle peut comprendre une boucle s'étendant vers la deuxième extrémité du ruban.

L'étiquette peut comprendre plusieurs rubans se croisant au niveau de l'antenne, la piste sacrificielle formant une boucle dans chaque segment de ruban partant de l'antenne, hormis celui supportant l'impédance sacrificielle.

L'étiquette peut comprendre plusieurs rubans se croisant au niveau de l'antenne, la piste sacrificielle formant une boucle dans le segment de ruban opposé à celui supportant l'impédance sacrificielle.

On peut prévoir un conteneur comprenant un bouchon et une étiquette du type susmentionné dont la zone de substrat portant l'antenne a un diamètre inférieur à celui du bouchon, fixé par collage sur le conteneur et le bouchon de manière que l'antenne soit centrée sur le bouchon.

### Description sommaire des dessins

Des modes de réalisation seront exposés dans la description suivante, faite à titre non limitatif en relation avec les figures jointes parmi lesquelles :
- la figure 1 représente un mode de réalisation d'étiquette NFC anti-contrefaçon pour une bouteille ;
- la figure 2 est un schéma-bloc électrique équivalent du dispositif de la figure 1 ;
- la figure 3 illustre une mise en situation du dispositif de la figure 1 sur une bouteille de vin ;
- la figure 4 représente une variante du dispositif de la figure 1 ;
- la figure 5 représente un autre mode de réalisation d'étiquette NFC anti-contrefaçon pour une bouteille ;
- la figure 6 illustre une mise en situation du dispositif de la figure 5 sur une bouteille de vin ;
- la figure 7 représente un autre mode de réalisation d'étiquette NFC anti-contrefaçon pour une bouteille ;
- la figure 8 est un schéma-bloc électrique équivalent du dispositif de la figure 7 ;
- la figure 9 représente une variante du dispositif de la figure 7 ;
- la figure 10 représente un autre mode de réalisation d'étiquette NFC anti-contrefaçon pour une bouteille ;
- la figure 11 représente un autre mode de réalisation d'étiquette NFC anti-contrefaçon pour une bouteille ; et
- les figures 12 et 13 représentent une variante de l'étiquette de la figure 11 sous deux formes industrialisables dans des technologies courantes.

### Description de modes de réalisation

Dans le contexte du brevet US 7898422 susmentionné, une fois que la bouteille a été ouverte, le dispositif NFC devient muet. Pourtant, l'utilisateur pourrait souhaiter consulter de nouveau les informations, par exemple pour les partager avec un ami, ou se rendre sur le site web du producteur pour commander de nouvelles bouteilles.

Une étiquette du type décrit dans la demande de brevet US 2005-0012616 susmentionnée ne permet pas de différencier l'état intègre ou ouvert d'un conteneur par les informations que l'étiquette renvoie. En effet, les informations renvoyées sont identiques, quelque soit l'état de l'antenne sacrificielle, à condition de disposer d'un lecteur pouvant alimenter l'étiquette dans son mode « sans antenne ».

Une double étiquette du type décrit dans la demande de brevet US 2007-0210173 susmentionnée nécessite deux circuits NFC indépendants et deux étapes de fixation différentes sur l'objet à protéger, ce qui augmente le coût d'industrialisation. Par ailleurs, chaque circuit NFC, étant indépendant, conserve la totalité de sa fonctionnalité lorsqu'il est interrogé par le lecteur.

On propose ci-après des dispositifs anti-contrefaçon sans contact, par exemple de type NFC, pour des conteneurs, notamment des bouteilles ou des flacons, sous la forme d'étiquettes peu coûteuses à fabriquer. En outre, une telle étiquette est conçue pour permettre une authentification lorsqu'elle est intègre, et une simple lecture et transmission des informations lorsqu'elle a été rompue à l'ouverture du conteneur. En effet, lorsque le conteneur a été ouvert, l'utilisateur peut simplement souhaiter relire les informations disponibles dans le dispositif sans contact sans procéder à une authentification.

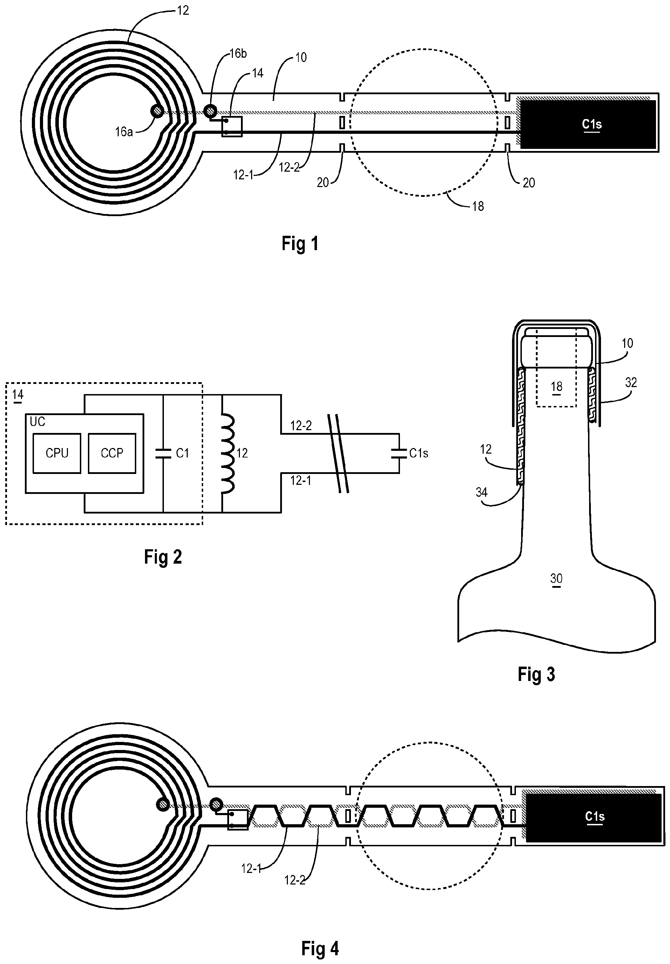

La figure 1 illustre un premier mode de réalisation d'une étiquette NFC anti-contrefaçon que l'on désignera par « double mode ». L'étiquette est sous la forme d'un ruban 10 en matière isolante servant de substrat pour former des pistes conductrices selon les techniques courantes de fabrication d'étiquettes RFID. L'une des extrémités du ruban est agrandie pour loger une antenne NFC 12 formée de plusieurs spires d'une piste conductrice.

Un microcircuit 14 est disposé au voisinage du raccord entre le ruban 10 et l'antenne 12 et est connecté aux bornes de l'antenne par une piste 12-1 sur la même face que l'antenne, et une piste 12-2 sur la face opposée, rejoignant l'extrémité de la spire intérieure de l'antenne par un via 16a. Un via 16b permet la connexion du microcircuit 14 à la piste 12-2.

Le microcircuit 14 est assemblé selon la technique dite « flip-chip » ou par collage avec une colle conductrice. Le microcircuit intègre les fonctions de gestion du dispositif NFC. Le dispositif pouvant offrir une fonction d'authentification, il est de type actif, c'est-à-dire que le microcircuit intègre un microcontrôleur et des fonctions de cryptographie. Le microcircuit puise alors son alimentation de l'énergie fournie à l'antenne par un lecteur NFC, qui peut être un smartphone, une tablette, une montre, etc. muni d'une interface NFC.

Les pistes 12-1 et 12-2 se prolongent jusqu'à l'extrémité opposée du ruban, où elles sont connectées respectivement à deux surfaces conductrices formées de part et d'autre du ruban. Ces surfaces conductrices en regard forment un condensateur sacrificiel C1s.

Le dispositif est conçu pour être fixé sur un conteneur, par exemple une bouteille, de sorte que la partie centrale du ruban soit placée en travers d'un élément de fermeture 18 du conteneur, par exemple un bouchon. On souhaite que le ruban soit rompu, en provoquant également la rupture d'une des pistes 12-1 et 12-2, lorsque la bouteille est ouverte, c'est-à-dire lorsque le bouchon 18 est retiré. Pour cela, la fixation du ruban sur le conteneur est conçue pour présenter une résistance de rupture supérieure à la résistance de rupture du ruban. Une résistance de fixation élevée peut être obtenue par collage, et la résistance requise peut être garantie en collant le ruban sur une surface suffisante.

On peut également diminuer la résistance de rupture du ruban en prévoyant, comme cela est représenté, des amorces de rupture 20 au voisinage du bouchon. De préférence, ces amorces sont situées à la limite de la zone de collage du ruban, ce qui provoque une concentration de contraintes qui favorise la rupture.

Le ruban peut être collé sur le conteneur par la face sur laquelle sont formées la majorité des pistes conductrices. L'adhérence par collage des pistes sur le conteneur est généralement plus élevée que l'adhérence des pistes sur le ruban. Il en résulte que toute tentative de décollage de l'étiquette entraîne l'arrachement des pistes conductrices, qui restent collées au conteneur.

Les pistes étant généralement réalisées en aluminium, cela rend difficile la réparation des pistes sectionnées par soudure ou brasure du fait de la couche d'oxyde isolante qui se forme sur l'aluminium dès son exposition à l'air.

La figure 2 est un schéma électrique équivalent du dispositif de la figure 1. Le microcircuit 14 comprend un microcontrôleur dédié UC qui met en oeuvre les fonctions logiques et analogiques du microcircuit, notamment l'alimentation en puissance du circuit à partir du champ fourni à l'antenne par un lecteur NFC, la démodulation de signaux transmis par le lecteur, la modulation de l'impédance de l'antenne pour émettre des signaux vers le lecteur, et la génération de clés sécurisées pour authentifier les informations émises.

Le microcircuit comprend en outre un condensateur C1connecté aux bornes de l'antenne 12. Les pistes 12-1 et 12-2 relient le condensateur sacrificiel C1s en parallèle sur le condensateur C1. L'antenne 12 et les condensateurs C1 et C1s forment un circuit d'antenne dont la fréquence d'accord est déterminée par la somme des valeurs des condensateurs C1 et C1s, et par l'inductance de l'antenne. Ces valeurs sont choisies pour accorder le circuit d'antenne sur une fréquence nominale typique choisie pour une bonne interopérabilité entre dispositifs conformes aux normes, par exemple 14 MHz.

Lorsque le condensateur sacrificiel C1s est déconnecté du circuit d'antenne après la rupture du ruban, le circuit d'antenne se trouve accordé sur une fréquence décalée au-dessus de la fréquence nominale, par exemple 17 MHz, définie par le seul condensateur C1 et l'inductance de l'antenne. Il en résulte que le dispositif peut toujours être alimenté par le champ d'un lecteur, mais que la puissance transmise est inférieure.

Pour procéder à des opérations d'authentification, le microcontrôleur UC du microcircuit 14 possède des fonctions cryptographiques. Le microcontrôleur peut comprendre un processeur CPU d'usage général assisté d'un coprocesseur cryptographique CCP.

La simple lecture d'informations stockées dans le microcircuit et leur transmission par l'antenne sollicite peu le processeur CPU et demande peu de puissance électrique. Le coprocesseur CCP n'est alors pas utilisé. Le courant consommé peut être inférieur à 1 mA. Ce niveau de puissance peut être fourni même par un circuit d'antenne désaccordé.

Une opération cryptographique, par contre, sollicite le processeur CPU et le coprocesseur CCP, et peut consommer un courant de plusieurs milliampères. Ce niveau de puissance ne peut être fourni si le circuit d'antenne est trop désaccordé, même en venant toucher l'étiquette avec le lecteur.

Avec ces éléments, sachant que C1 + C1s est la valeur requise pour obtenir un circuit d'antenne accordé sur la fréquence nominale, on choisit la valeur C1 de sorte que, en absence du condensateur C1s, le circuit d'antenne soit accordé suffisamment pour produire le courant requis pour une simple lecture et transmission d'informations, mais insuffisamment pour produire le courant requis par une opération cryptographique.

Dans un exemple où la fréquence nominale est de 14 MHz, on obtient ce fonctionnement souhaité lorsque la fréquence d'accord décalée est choisie voisine de 17 MHz dans une technologie donnée.

Le microcircuit peut alors être programmé pour commencer systématiquement par la production des informations et finir par les opérations cryptographiques. La rupture du ruban déconnecte le condensateur C1s du circuit d'antenne, ce qui provoque le décalage d'accord du circuit d'antenne. Dans ce cas, au moment où le microcircuit démarre les opérations cryptographiques, la tension d'alimentation s'écroule en provoquant la réinitialisation du microcircuit. Le microcircuit redémarre et recommence le même cycle.

La figure 3 représente un exemple de mise en situation d'une étiquette NFC anti-contrefaçon du type de la figure 1 sur une bouteille de vin 30. (Pour la clarté de la figure, les espaces entre éléments ont été agrandis de façon exagérée.) Le bouchon 18 affleure la partie supérieure du col de la bouteille. La partie centrale du ruban 10 recouvre horizontalement le bouchon 18. Les extrémités du ruban sont pliées vers le bas à la verticale pour épouser les flancs du col, et sont fixées sur le col par une couche de colle 34. Le ruban peut être suffisamment souple pour permettre le pliage à la partie supérieure du col et épouser le rayon du col. Dans ce cas, l'antenne est de préférence plane.

Une bouteille de vin est généralement munie d'une capsule de protection 32 qui enveloppe le bouchon et la partie supérieure du col. Comme cela est représenté, la capsule peut également envelopper le ruban 10. Dans ce cas, comme la capsule est souvent métallique, il est préférable que l'antenne 12 soit en dehors de la capsule pour être exposée aux champs électromagnétiques. La longueur du ruban 10 est choisie en conséquence.

L'étiquette NFC ainsi disposée peut être lue par un consommateur à l'aide de son smartphone NFC ou tout autre lecteur NFC. Il pourra notamment, lorsque l'étiquette est intègre, procéder à une authentification à l'aide d'une clé sécurisée disponible dans l'étiquette, servant à confirmer que le produit est conforme aux informations fournies par l'étiquette via un serveur d'authentification et une application dédiée. Il pourra en outre, à l'aide de la même application ou une application générique, consulter les caractéristiques du produit, même lorsque l'étiquette anti-contrefaçon a été rompue, incluant le type d'informations pouvant figurer sur une étiquette papier de la bouteille. Plusieurs bouteilles d'un même lot pourront avoir des étiquettes partageant un même identifiant ou clé.

Les pistes 12-1, 12-2 de la figure 1 peuvent être relativement longues et former des antennes parasites qui captent des champs électromagnétiques non-souhaités. Dans le cas où le ruban 10 est enveloppé dans une capsule métallique (figure 3), la capsule protège ces éléments des champs magnétiques. Dans d'autres situations, la capsule peut être transparente aux champs, ou être absente.

La figure 4 illustre une variante de l'étiquette de la figure 1, moins sensible aux champs parasites. La paire de pistes 12-1, 12-2 est configurée pour former une paire torsadée. Pour cela, par exemple, les pistes 12-1 et 12-2 ne sont pas « torsadées » à proprement parler, mais crénelées en opposition de phase.

Certains amateurs de vin peuvent souhaiter conserver le bouchon, sur lequel sont inscrites les principales informations relatives au vin. Dans ce cas, il serait commode que le bouchon conserve la partie active de l'étiquette NFC afin que l'amateur puisse obtenir de plus amples informations sur le vin en lisant les informations contenues dans l'étiquette, par exemple à l'aide de son smartphone.

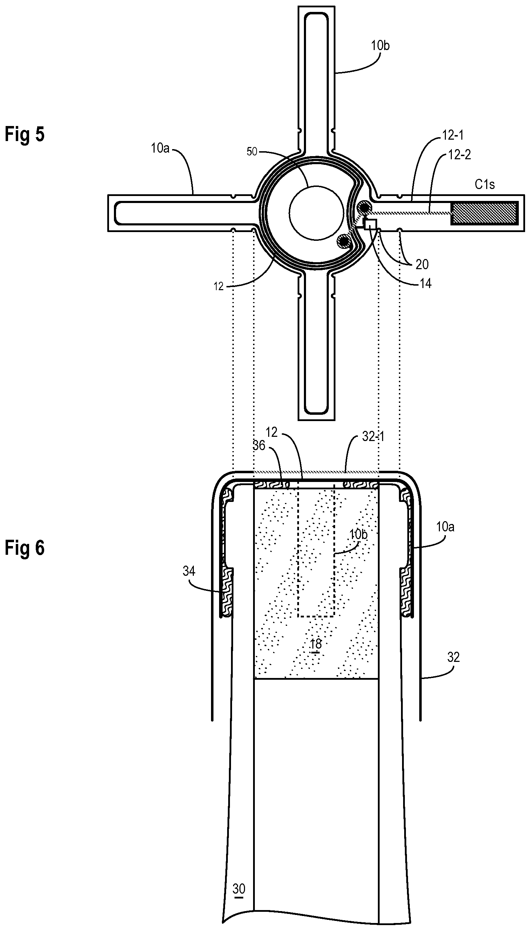

La figure 5 représente un mode de réalisation d'étiquette anti-contrefaçon dédiée à cette utilisation. L'étiquette NFC est conçue pour que sa partie active, à savoir l'antenne 12 et le microcircuit 14, reste fixée sur la partie supérieure du bouchon, et que cette partie active permette une lecture d'informations sans authentification une fois que le bouchon a été extrait.

L'étiquette comprend ici un substrat sous la forme de deux rubans 10a et 10b croisés. L'antenne 12 est agencée au croisement des deux rubans, et comprend des spires enroulées en anneau autour d'une zone centrale suffisamment grande pour permettre le passage d'un tire-bouchon sans détériorer l'antenne. Comme cela est représenté, la zone centrale du substrat peut comporter une ouverture 50 pour faciliter le passage du tirebouchon et limiter la déformation du substrat. Les diamètres externes de l'antenne 12 et de la zone annulaire du substrat qui la supporte sont au plus égaux au diamètre du bouchon.

Les segments de ruban ou ailes partant radialement de l'antenne sont conçus pour se séparer de la zone centrale à l'extraction du bouchon, et peuvent comporter à cet effet des amorces de rupture 20 au voisinage du diamètre externe de la zone annulaire portant l'antenne. Le microcircuit 14 et ses pistes de connexion au circuit d'antenne sont agencés à l'intérieur de la zone annulaire du substrat pour ne pas rester sur les segments de ruban à l'extraction du bouchon. Le condensateur sacrificiel C1s est agencé à l'extrémité distale de l'une des ailes, ici l'aile droite faisant partie du ruban 10a.

Cette structure est similaire à celle de la figure 1 en considérant l'antenne et l'aile droite portant le condensateur sacrificiel C1s. Les ailes supplémentaires rendent plus difficile l'accès au bouchon sans rompre l'étiquette. Comme cela est représenté, la piste 12-1 peut former une boucle dans chacune des trois ailes supplémentaires avant de rejoindre la borne correspondante du microcircuit 14, de sorte que la piste est sectionnée à la rupture de l'une quelconque des ailes.

La figure 6 représente un exemple de mise en situation d'une étiquette NFC anti-contrefaçon du type de la figure 5 sur une bouteille de vin 30. (Pour la clarté de la figure, les espaces entre éléments ont été agrandis de façon exagérée.) Le bouchon 18 affleure la partie supérieure du col de la bouteille ou est légèrement en retrait. La partie annulaire centrale du substrat portant l'antenne 12 est ajustée sur la face supérieure du bouchon 18 et y est fixée par une couche de colle 36. Les ailes des rubans 10a, 10b sont pliées vers le bas à la verticale pour épouser les flancs du col, et sont fixées sur le col par une couche de colle 34.

Pour ouvrir la bouteille, un tire-bouchon peut être introduit par l'ouverture centrale 50 de l'étiquette, sans détériorer l'antenne 12. L'extraction du bouchon 18 provoque la rupture des ailes, et donc la suppression du condensateur sacrificiel C1s du circuit d'antenne. La partie active de l'étiquette, sans le condensateur sacrificiel C1s, reste fixée sur la face supérieure du bouchon. Cette partie active reste opérationnelle pour une simple lecture d'informations, mais pas pour procéder à une authentification. Une authentification n'est possible que si l'étiquette est intègre, c'est-à-dire fixée sur une bouteille non-ouverte.

Une capsule de protection 32 enveloppe généralement la partie supérieure du col, y compris les ailes des rubans 10a, 10b. Si la capsule est métallique, elle comporte de préférence une partie 32-1 en regard de l'antenne, représentée en grisé, qui est perméable au champ magnétique. Afin de favoriser le passage de lignes de champ à la périphérie de l'antenne, la partie 32-1 a de préférence un diamètre supérieur à celui de l'antenne. On remarque ainsi que ce mode de réalisation offre une étiquette NFC discrète, qui n'altère pas l'aspect de la bouteille, ce que pourraient souhaiter certains producteurs ou industriels.

L'étiquette de la figure 5 a été représentée à titre d'exemple sous la forme de deux rubans croisés 10a et 10b formant quatre ailes radiales. Le nombre d'ailes peut être quelconque, mais de préférence au moins égal à deux. Toutes les ailes ne comportent pas forcément des pistes conductrices - ainsi on peut prévoir une étiquette avec une première paire d'ailes opposées comportant des pistes, et une deuxième paire d'ailes opposées sans pistes. Le nombre d'ailes peut être impair.

Les étiquettes NFC anti-contrefaçon des figures 1 et 5 sont efficaces pour identifier des bouteilles qui ont été débouchées et potentiellement re-remplies avec un produit d'origine douteuse. Elles ne permettent toutefois pas de détecter le prélèvement ou le remplacement de contenu à l'aide d'une seringue, par exemple selon le procédé Coravin™ qui consiste à transpercer le bouchon à l'aide d'une seringue et à aspirer le contenu en injectant un gaz inerte dans la bouteille. Une telle technique laisserait l'étiquette intacte.

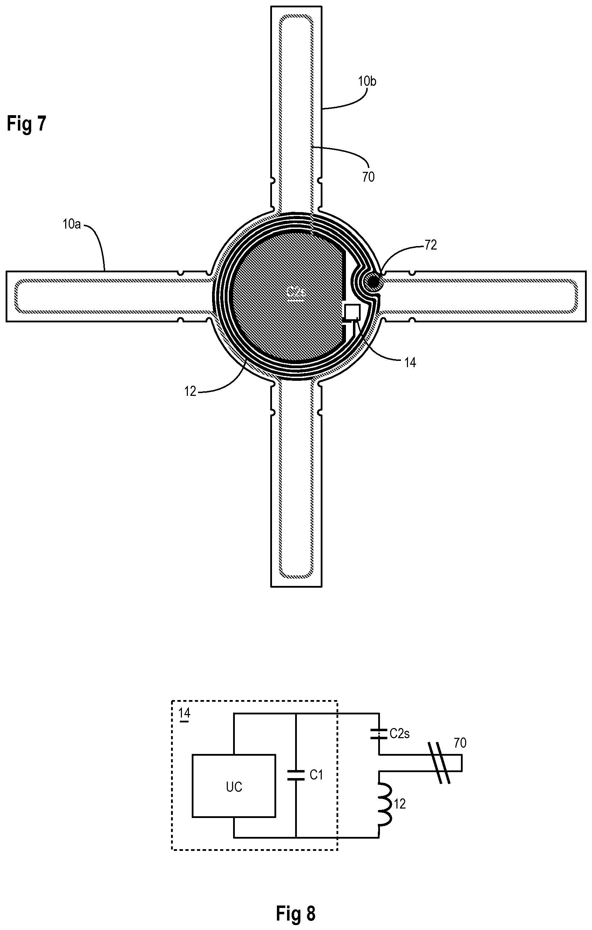

La figure 7 illustre un mode de réalisation d'étiquette NFC permettant une détection de tentative de perçage du bouchon. L'étiquette est ici réalisée sur un substrat de même forme en croix que l'étiquette de la figure 5. La partie centrale, logeant l'antenne 12, a cependant un diamètre supérieur à celui du bouchon. L'antenne 12 est bobinée en anneau dans la zone entre le bord du goulot et le bouchon, laissant ainsi un espace central du diamètre du bouchon, espace central formant une zone d'intérêt à protéger. Cet espace central est utilisé pour former un condensateur sacrificiel C2s. Le condensateur C2s est formé par deux plages métalliques en regard, l'une formée sur la face supérieure du substrat (en grisé) et l'autre sur la face inférieure du substrat (en noir). Les plages n'ont pas été représentées aux mêmes dimensions pour pouvoir les distinguer sur la figure - en pratique elles sont aux mêmes dimensions et remplissent le plus possible la zone d'intérêt correspondant à la face supérieure du bouchon. Le microcircuit 14 est de préférence également agencé dans cette zone.

L'antenne 12 et le condensateur sacrificiel C2s sont connectés en série dans ce mode de réalisation. La plage inférieure du condensateur (en noir) est reliée directement à une première borne du microcircuit 14. Une piste conductrice 70 part de la plage supérieure du condensateur (en grisé) et comprend une boucle pénétrant dans chaque segment de ruban ou aile partant radialement de la zone centrale. La dernière boucle traverse le substrat par un via 72 et rejoint l'extrémité externe de l'antenne 12. L'extrémité interne de l'antenne est reliée à la deuxième borne du microcircuit 14.

Une étiquette du type de la figure 7 peut être montée sur une bouteille de la façon représentée à la figure 6. La zone centrale de l'étiquette peut être collée par toute sa surface sur le bouchon. Toute tentative d'accès au bouchon se solde alors par le perçage des deux plages métalliques du condensateur sacrificiel C2s. Lors du perçage, le substrat en matière plastique entre les deux plages métalliques se comprime de manière permanente, tandis que le métal de la plage supérieure s'étire, en suivant le mouvement de l'objet perçant (une aiguille ou un tire-bouchon), pour atteindre la plage inférieure. La plage inférieure, du fait qu'elle est retenue par une couche de colle, généralement plus dure que le substrat, se déforme moins que la plage supérieure. Il en résulte un sertissage de la zone déformée de la plage supérieure dans la plage inférieure, et donc que les deux plages du condensateur se retrouvent en court-circuit permanent, même à l'extraction de l'objet perçant. Ce court-circuit se produit également si les plages du condensateur sont en aluminium, car cet aluminium est mis en oeuvre à la fabrication dans une atmosphère inerte empêchant la formation d'oxyde, et les zones mises en contact des deux plages restent dépourvues d'oxyde du fait qu'elles sont protégées par le substrat.

Ce court-circuit du condensateur sacrificiel C2s est exploité pour désaccorder le circuit d'antenne de manière que le dispositif NFC fonctionne en mode dégradé, c'est-à-dire qu'il offre les fonctions de lecture, mais pas les fonctions cryptographiques.

Une extraction du bouchon provoque en outre la rupture des ailes et donc de la piste conductrice 70. Cette rupture déconnecte l'antenne 12 du microcircuit, de sorte que le dispositif NFC devient inopérant. L'étiquette est alors muette.

La figure 8 est un schéma électrique équivalent du dispositif de la figure 7. Comme on l'a précédemment indiqué, le condensateur sacrificiel C2s et l'antenne 12 sont reliés en série entre les deux bornes du microcircuit 14. Le circuit d'antenne comprend ainsi le condensateur C1 du microcircuit relié en série avec le condensateur C2s et l'inductance de l'antenne 12. Lorsque le condensateur C2s est court-circuité, l'antenne 12 se retrouve directement connectée aux bornes du condensateur C1.

Compte tenu de ces deux configurations, les valeurs des composants sont choisies pour atteindre un accord sur la fréquence nominale souhaitée lorsque le condensateur C2s est intègre, et un désaccord plaçant le dispositif en mode dégradé lorsque le condensateur C2s est court-circuité. La valeur du condensateur sacrificiel C2s est déterminée par le diamètre du bouchon et l'épaisseur du substrat.

Avec un substrat en PET de 38 µm typiquement utilisé pour les applications RFID et le diamètre d'un bouchon de vin (21 mm), on obtient une capacité de l'ordre de 116 pF. En prévoyant neuf spires d'antenne et une valeur de 104 pF pour le condensateur C1, on obtient une fréquence d'accord de l'ordre de 15 MHz, qui est suffisamment proche de la fréquence nominale souhaitée de 14 MHz pour assurer toutes les fonctions (lecture et cryptographie). Lorsque le condensateur C2s est court-circuité, on obtient une fréquence d'accord d'environ 11 MHz, juste suffisante pour assurer les fonctions de lecture.

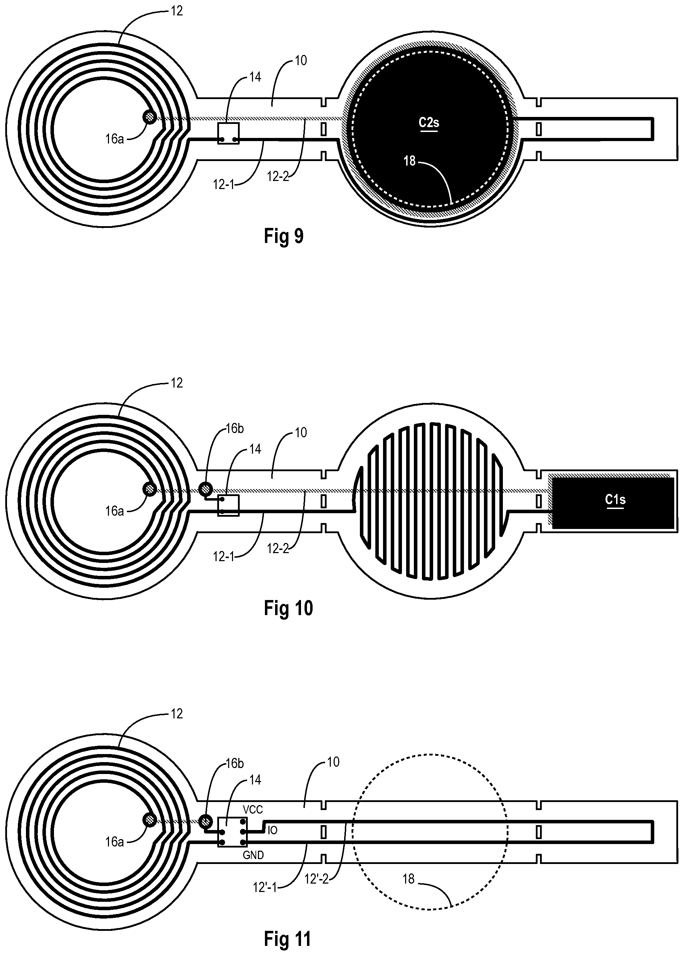

La figure 9 représente un mode de réalisation d'étiquette NFC permettant une détection de tentative de perçage dans le même format que l'étiquette de la figure 1, c'est-à-dire avec une antenne 12 déportée à une extrémité du ruban. La zone centrale du ruban destinée à recouvrir le bouchon 18 porte les plages métalliques formant le condensateur sacrificiel C2s. Le microcircuit 14 est monté en série dans la piste 12-1 traversant le ruban. Cette piste est par ailleurs reliée à la plage métallique supérieure du condensateur C2s après avoir effectué une boucle vers l'extrémité distale du ruban. La plage métallique inférieure du condensateur est reliée à la piste 12-2.

Ce mode de réalisation offre une plus grande latitude pour réaliser l'antenne 12 que le mode de réalisation de la figure 7, et permet de recouvrir l'intégralité du bouchon par des plages métalliques. Il est cependant moins adapté dans le cas où on souhaite cacher l'étiquette intégralement sous la capsule.

La figure 10 illustre une variante proche de l'étiquette de la figure 1, permettant également une détection de tentative de perçage. A la différence de l'étiquette de la figure 1, l'une des pistes de connexion du condensateur sacrificiel C1s, ici la piste 12-1 présente, dans la zone d'intérêt à protéger, une configuration en créneaux resserrés occupant toute la surface de cette zone. Le pas des créneaux est de préférence inférieur au diamètre de l'aiguille pouvant servir au perçage, de sorte que l'insertion de l'aiguille brise la piste en au moins un endroit. Si la piste 12-1 ne peut pas être configurée avec un pas suffisamment petit, la deuxième piste 12-2, sur l'autre face du substrat, peut être configurée selon des créneaux complémentaires, entrelaçant les segments de la piste 12-2 avec les segments de la piste 12-1, ce qui divise virtuellement le pas par deux.

Cette étiquette fonctionne en mode dégradé, permettant seulement la lecture d'informations, aussi bien lorsque le bouchon est retiré (brisant les pistes 12-1 et 12-2 à la rupture du ruban), que lorsque le bouchon est percé (brisant un segment de piste dans la zone à protéger).

La configuration de la figure 10 peut être transposée à la configuration en étoile de la figure 5 ou 7 si on souhaite une étiquette discrète et pouvant rester sur le bouchon extrait en vue de lire les informations.

De nombreuses variantes et modifications des modes de réalisation décrits ici apparaîtront à l'homme du métier. Pour réaliser un désaccord maîtrisé du circuit d'antenne à la rupture du ruban, on a décrit un condensateur sacrificiel (C1s, C2s) comme mode de réalisation préféré - on peut bien entendu utiliser des techniques équivalentes menant à un désaccord du circuit d'antenne, par exemple en prévoyant une inductance sacrificielle ou autre impédance sacrificielle à la place du condensateur sacrificiel.

La maîtrise des valeurs des composants du circuit d'antenne pour obtenir le désaccord souhaité, c'est-à-dire permettant en cas de rupture de l'étiquette d'alimenter suffisamment les fonctions de lecture mais insuffisamment les fonctions cryptographiques, peut être difficile dans certaines conditions. Une caractéristique des dispositifs double mode décrits jusqu'à présent est cependant qu'ils peuvent utiliser un microcircuit 14 clé en main à seulement deux broches indifférenciées, qui pourrait dans certaines circonstances simplifier les procédés d'industrialisation et diminuer les coûts.

La société Inside Secure commercialise des microcircuits de gestion de dispositif NFC sous la dénomination VaultIC™ 152, qui possèdent cinq broches - deux broches pour connecter l'antenne, une broche de masse GND, une broche d'entrée/sortie numérique programmable IO, et une broche VCC pouvant servir à alimenter le microcircuit à partir d'une batterie, ou pour alimenter d'autres éléments à partir de l'énergie fournie à l'antenne. Un tel microcircuit peut être utilisé dans une structure d'étiquette double mode ayant moins de contraintes quant à l'obtention des deux modes de fonctionnement dans une industrialisation à grande échelle.

La figure 11 représente schématiquement une telle structure d'étiquette NFC, offrant une fonctionnalité complète lorsqu'elle est intègre, et une fonctionnalité restreinte sans cryptographie lorsqu'elle a été rompue. Le microcircuit 14 comporte ainsi cinq broches, dont deux sont connectées à l'antenne 12 selon une configuration similaire à celle de la figure 1. Les pistes conductrices 12-1 et 12-2 des figures précédentes, ici notées 12'-1 et 12'-2, sont séparées des pistes de l'antenne 12 et sont connectées respectivement à l'une des broches d'alimentation, par exemple la broche de masse GND, et à la broche d'entrée/sortie IO du microcircuit 14. Les pistes 12'-1 et 12'-2 peuvent être sur la même face du ruban 10 et sont connectées l'une à l'autre à l'extrémité distale du ruban pour former une boucle qui traverse la zone sacrificielle, correspondant par exemple à l'emplacement du bouchon 18.

Dans certains microcircuits du type VaultIC, la broche d'entrée/sortie IO est tirée vers la ligne d'alimentation VCC par une résistance, de sorte que son niveau logique est haut quand elle n'est pas connectée. Dans la configuration de la figure 11, la broche IO est maintenue à un niveau logique bas par la boucle 12'-1, 12'-2. Lorsque la boucle est rompue, le niveau de la broche IO devient haut.

Ainsi, le microcircuit 14 peut être programmé pour tester le niveau de la broche IO à chaque lecture. Lorsque le niveau est bas, c'est-à-dire lorsque l'étiquette est intègre, le programme du microcircuit peut être conçu pour dérouler l'ensemble des opérations prévues, notamment la production d'informations en clair et l'exécution d'une opération d'authentification utilisant la cryptographie. Lorsque le niveau est haut, c'est-à-dire lorsque la boucle 12'-1, 12'-2 est ouverte, le programme du microcircuit peut être conçu pour produire les informations en clair mais omettre l'opération d'authentification.

L'une des pistes 12'-1, 12'-2 peut être crénelée comme à la figure 10, l'autre étant alors disposée sur l'autre face du ruban. Cela permet de détecter la rupture du ruban, par enlèvement de l'étiquette ou par le perçage du bouchon, pour omettre l'étape d'authentification.

Dans d'autres applications, la broche d'entrée/sortie IO du microcircuit 14 peut servir à détecter un court-circuit plutôt qu'une ouverture de circuit. Ainsi, dans une configuration similaire à celle représentée dans les figures 7 et 9, la broche IO peut être reliée à l'une des plages métalliques du condensateur sacrificiel C2s, l'autre plage métallique étant reliée à la masse. Un perçage du bouchon est alors détectable par le court-circuit permanent entre les plages formant le condensateur sacrificiel C2s. En absence de perçage, la broche IO est alors au niveau haut. Lorsque le condensateur est percé, celui-ci se retrouve en court-circuit et tire la broche IO vers la masse. Dans ce cas, le microcircuit réagit aux états de la broche IO selon une logique inversée par rapport à ce qui vient d'être décrit.

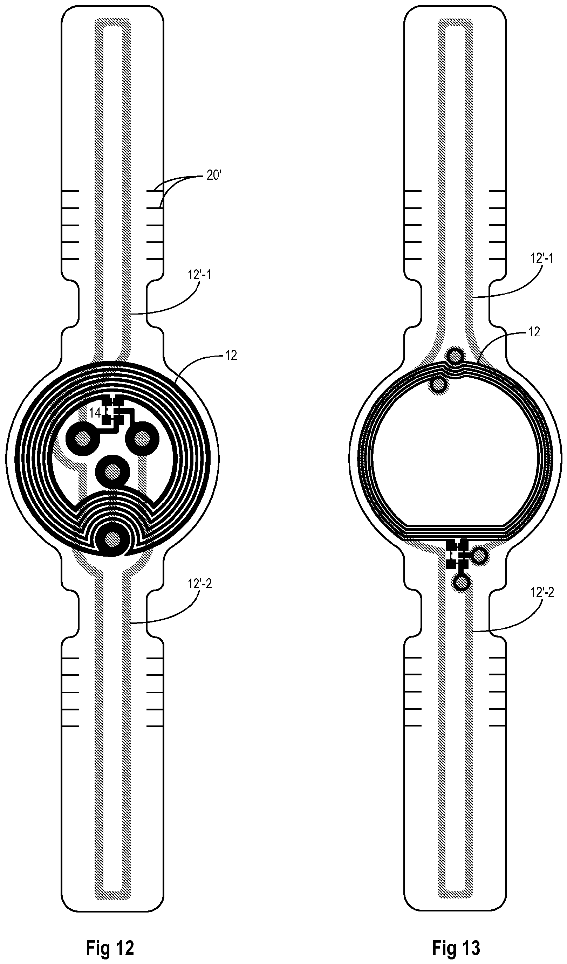

La figure 12 représente une variante de l'étiquette de la figure 11. L'antenne 12 est agencée au centre du ruban de manière à être centrée sur le bouchon une fois que l'étiquette est en place sur le goulot d'une bouteille. Le microcircuit 14 est disposé à l'intérieur du bobinage d'antenne. Les deux ailes de part et d'autre de l'antenne sont parcourues par la boucle 12'-1, 12'-2, de sorte que la rupture d'une seule des ailes suffit à interrompre la boucle. Chacune des ailes comporte, sur chacun de ses bords à proximité de la partie centrale, plusieurs entailles transversales 20' servant d'amorce de rupture.

Une telle étiquette peut n'être fixée à la bouteille que par ses ailes. Lorsque la bouteille est ouverte, les ailes seront brisées au moment où l'utilisateur découpe et retire la capsule qui recouvre le bouchon et l'étiquette. La partie centrale de l'étiquette reste utilisable sans la fonction d'authentification pour partager les informations qu'elle contient.

Cette figure 12 correspond à un prototype opérationnel réalisé dans une technologie à pistes en aluminium. Le diamètre de la partie centrale de l'étiquette est de 25 mm, le diamètre du goulot d'une bouteille de vin. Cette technologie, dans son état actuel, nécessite des vias relativement grands qui peuvent occuper une grande partie de la zone centrale de l'antenne, ce qui peut rendre difficile la réalisation d'étiquettes selon les figures 5 et 7, nécessitant une zone libre au centre de l'antenne.

La figure 13 représente un prototype d'étiquette du type de la figure 12 réalisé dans une technologie à pistes en cuivre. Cette technologie permet de réaliser des pistes et des vias selon un pas plus fin que la technologie aluminium, de sorte qu'on parvient à libérer une zone centrale étendue permettant une réalisation aisée d'étiquettes du type des figures 5 et 7.

Les étiquettes à antenne déportée (notamment celles des figure 1 et 11) sont également utilisables sur des conteneurs ou des éléments de fermeture métalliques, en munissant la face inférieure de l'étiquette au niveau de l'antenne d'une couche d'isolant électromagnétique, comme de la ferrite.

A partir de la figure 11 on a décrit une détection de continuité à l'aide de la broche IO du microcircuit 14, cette détection consistant essentiellement à observer la modification permanente du niveau de tension de la broche IO.

Pour contrer certaines possibilités de réparation de l'étiquette, on peut concevoir le microcircuit pour qu'il émette une séquence logique pseudo-aléatoire sur la broche IO. La boucle sacrificielle peut alors être reliée entre la broche IO et une deuxième broche d'entrée/sortie programmée pour comparer la séquence logique entrante à celle émise sur la broche IO. Si le microcircuit détecte que la séquence entrante diffère de la séquence émise, il peut se mettre dans le mode offrant la fonctionnalité restreinte.

En pratique, la réalisation de ce type de détection ne nécessite aucun circuit supplémentaire. En effet, les microcircuits utilisés dans ce type de produit sont généralement équipés d'un « bouclier actif » protégeant la puce des intrusions, comme cela est décrit dans le brevet US8296845, par exemple. Un bouclier actif comprend généralement un réseau dense de pistes conductrices réalisé sur le dernier niveau de métal de la puce. Les pistes reçoivent par une extrémité une séquence logique pseudo-aléatoire, et un circuit recueille le signal aux autres extrémités des pistes pour le comparer au signal attendu. Le microcircuit peut être programmé pour prendre des mesures préventives si une discordance entre les signaux est détectée.

Le microcircuit peut dans ce cas être modifié de manière simple pour étendre l'une des pistes du bouclier actif par les broches d'entrée/sortie et la boucle sacrificielle. La rupture de la boucle sacrificielle a alors le même effet que la rupture de la piste du bouclier actif.

## Revendications

1. Dispositif à couplage magnétique en champ proche comprenant :
• un substrat pliable en forme de ruban (10) ayant deux extrémités disposées de part et d'autre d'une zone sacrificielle (18) ;
• une antenne (12) agencée à une première extrémité du ruban ;
• un condensateur (C1) agencé à la première extrémité du ruban et connecté de manière à influencer la fréquence d'accord de l'antenne ;
• une impédance sacrificielle (C1s) agencée à la deuxième extrémité du ruban et connectée de manière à influencer la fréquence d'accord de l'antenne ; et
• des pistes conductrices (12-1, 12-2) agencées dans la longueur du ruban à travers la zone sacrificielle pour connecter l'impédance sacrificielle en parallèle aux bornes de l'antenne, d'où il résulte qu'une rupture de la zone sacrificielle déconnecte l'impédance sacrificielle et modifie la fréquence d'accord de l'antenne.

2. Dispositif selon la revendication 1, dans lequel l'impédance sacrificielle (C1s) définit avec l'antenne et le condensateur (C1) une fréquence d'accord nominale, le dispositif comprenant en outre un microcircuit de commande (14) connecté pour être alimenté à partir de l'antenne, la valeur du condensateur (C1) étant choisie pour que, en absence de l'impédance sacrificielle (C1s), la puissance d'alimentation du microcircuit soit insuffisante pour offrir une fonctionnalité complète, mais suffisante pour offrir une fonctionnalité limitée quand le dispositif est alimenté par un champ à la fréquence nominale.

3. Dispositif selon la revendication 2, dans lequel la fonctionnalité complète du microcircuit inclut des fonctions de lecture d'informations et des fonctions cryptographiques, et la fonctionnalité limitée du microcircuit est dépourvue des fonctions cryptographiques.

4. Dispositif selon la revendication 3, dans lequel le ruban (10) comprend des zones d'amorce de rupture (20) dans une partie centrale.

5. Dispositif selon la revendication 3, dans lequel les pistes conductrices (12-1, 12-2) reliant l'impédance sacrificielle et l'antenne sont disposées de part et d'autre du ruban, et sont configurées en paire torsadée.

6. Conteneur comprenant :
• un élément de fermeture (18) ; et
• un dispositif à couplage magnétique en champ proche selon la revendication 1, dont le ruban est fixé en travers de l'élément de fermeture par collage sur le conteneur (30), la surface de ruban collée sur le conteneur étant choisie pour que la résistance de rupture du collage soit supérieure à la résistance de rupture du ruban, d'où il résulte que le retrait de l'élément de fermeture provoque la rupture du ruban dans la zone sacrificielle du ruban.

7. Conteneur selon la revendication 6, dans lequel le ruban comprend des zones d'amorce de rupture (20) au voisinage de l'élément de fermeture.

8. Conteneur selon la revendication 6, dans lequel des pistes conductrices formant l'antenne (12) et reliant les éléments du dispositif à couplage magnétique en champ proche entre eux sont disposées sur la face du ruban du côté du conteneur, d'où il résulte qu'une tentative de décollage du ruban entraîne un endommagement des pistes conductrices.

9. Conteneur selon la revendication 6, dans lequel le conteneur est une bouteille (30) et l'élément de fermeture est un bouchon (18).

10. Conteneur selon la revendication 9, sous la forme d'une bouteille comprenant une capsule (32) enveloppant le bouchon (18), le col de la bouteille, et le ruban (10), la longueur de ruban du côté de l'antenne étant choisie pour que la capsule laisse l'antenne exposée aux champs électromagnétiques.

## Patentansprüche

1. Nahfeld-Magnetkupplungsvorrichtung, umfassend:
• ein faltbares bandförmiges Substrat (10) mit zwei Enden, die beiderseits von einer Opferzone (18) angeordnet sind;
• eine Antenne (12), die an einem ersten Ende des Bandes eingerichtet ist;
• einen Kondensator (C1), der am ersten Ende des Bandes eingerichtet und derart angeschlossen ist, dass die Abstimmfrequenz der Antenne beeinflusst wird;
• eine Opferimpedanz (C1s), die am zweiten Ende des Bandes eingerichtet und derart angeschlossen ist, dass die Abstimmfrequenz der Antenne beeinflusst wird; und
• Leiterbahnen (12-1, 12-2), die in der Länge des Bandes durch die Opferzone eingerichtet sind, um die Opferimpedanz parallel zu den Antennenklemmen anzuschließen, woraus sich ergibt, dass bei einem Bruch der Opferzone die Opferimpedanz getrennt und die Abstimmfrequenz der Antenne geändert wird.

2. Vorrichtung nach Anspruch 1, wobei die Opferimpedanz (C1s) mit der Antenne und dem Kondensator (C1) eine nominale Abstimmfrequenz definiert, wobei die Vorrichtung ferner eine Steuermikroschaltung (14) umfasst, die angeschlossen ist, um ab der Antenne versorgt zu werden, wobei der Wert des Kondensators (C1) so gewählt ist, dass bei Abwesenheit der Opferimpedanz (C1s) die Versorgungsleistung der Mikroschaltung nicht ausreicht, um eine volle Funktionalität bereitzustellen, aber ausreicht, um eine begrenzte Funktionalität bereitzustellen, wenn die Vorrichtung durch ein Feld mit nominaler Frequenz versorgt wird.

3. Vorrichtung nach Anspruch 2, wobei die volle Funktionalität der Mikroschaltung Informationslesefunktionen und kryptographische Funktionen beinhaltet und die begrenzte Funktionalität der Mikroschaltung ohne kryptographische Funktionen ist.

4. Vorrichtung nach Anspruch 3, wobei das Band (10) Bruchauslösezonen (20) in einem zentralen Teil umfasst.

5. Vorrichtung nach Anspruch 3, wobei die Leiterbahnen (12-1, 12-2), welche die Opferimpedanz und die Antenne verbinden, beiderseits des Bandes angeordnet und als verdrilltes Paar konfiguriert sind.

6. Behälter, umfassend:
• ein Verschlusselement (18); und
• eine Nahfeld-Magnetkupplungsvorrichtung nach Anspruch 1, deren Band durch das Verschlusselement durch Kleben auf dem Behälter (30) befestigt ist, wobei die auf den Behälter geklebte Bandoberfläche ausgewählt ist, damit die Bruchfestigkeit der Verklebung größer als die Bruchfestigkeit des Bandes ist, woraus sich ergibt, dass das Entfernen des Verschlusselements den Bruch des Bandes in der Opferzone des Bandes bewirkt.

7. Behälter nach Anspruch 6, wobei das Band Bruchauslösezonen (20) in der Nähe des Verschlusselements umfasst.

8. Behälter nach Anspruch 6, wobei Leiterbahnen, welche die Antenne (12) bilden und die Elemente der Nahfeld-Magnetkupplungsvorrichtung miteinander verbinden, auf der behälterseitigen Fläche angeordnet sind, woraus sich ergibt, dass ein Versuch, das Band zu lösen, zu einer Beschädigung der Leiterbahnen führt.

9. Behälter nach Anspruch 6, wobei der Behälter eine Flasche (30) ist und das Verschlusselement ein Stopfen (18) ist.

10. Behälter nach Anspruch 9 in Form einer Flasche, umfassend eine Kappe (32), die den Stopfen (18), den Flaschenhals und das Band (10) umhüllt, wobei die Länge des Bandes auf der Seite der Antenne derart ausgewählt ist, dass die Kappe die Antenne elektromagnetischen Feldern ausgesetzt sein lässt.

## Claims

1. A near field magnetically coupled device comprising:
• a foldable substrate in the form of a tape (10) having two ends located on either side of a sacrificial area (18);
• an antenna (12) located at a first end of the tape;
• a capacitor (C1) connected for influencing a tuning frequency of the antenna, located at the first end of the tape;
• a sacrificial impedance (C1s) connected for influencing the tuning frequency of the antenna, located at the second end of the tape; and
• conductive tracks (12-1, 12-2) running along the tape across the sacrificial area to connect the sacrificial impedance in parallel with the antenna, whereby a rupture of the sacrificial area disconnects the sacrificial impedance and modifies the tuning frequency of the antenna.

2. The device of claim 1, wherein the sacrificial impedance (C1) defines with the antenna and the capacitor a nominal tuning frequency, the device further comprising a control microcircuit (14) connected to be power-supplied from the antenna, a value of the capacitor (C1) being chosen so that, in the absence of the sacrificial impedance (C1s), the microcircuit power supply is insufficient to provide a full functionality, but sufficient to provide a limited functionality, when the device is powered by a field at the nominal frequency.

3. The device of claim 2, wherein the full functionality of the microcircuit includes information reading functions and cryptographic functions, and the limited functionality of the microcircuit is devoid of the cryptographic functions.

4. The device of claim 3, wherein the tape (10) includes breaking points (20) in a central part of the tape.

5. The device of claim 3, wherein the conductive tracks (12-1, 12-2) connecting the sacrificial impedance and the antenna are located on either side of the tape, and are configured as a twisted pair.

6. A container comprising:
• a closure member (18);
• a near field magnetically coupled device according to claim 1, having its tape placed across the closure member and glued to the container (30), the tape surface area bonded to the container being chosen so that the rupture strength of the bonding is greater than the rupture strength of the tape, whereby withdrawal of the closure member causes a rupture of the tape in the sacrificial area of the tape.

7. The container of claim 6, wherein the tape includes break points (20) adjacent the closure member.

8. The container of claim 6, wherein conductive tracks forming the antenna (12) and interconnecting the components of the near field magnetically coupled device are located on the side of the tape facing the container, whereby an attempt to remove the tape damages the conductive tracks.

9. The container of claim 6, wherein the container is a bottle (30) and the closure member is a cork (18).

10. The container of claim 9 in the form of a bottle including a cap (32) enveloping the cork (18), the neck of the bottle, and the tape (10), the tape length up to the antenna being selected so that the cap exposes the antenna to electromagnetic fields.
